# EUROPÄISCHE PATENTSCHRIFT

(11) **EP 2 699 713 B1**
(45) Veröffentlichungstag und Bekanntmachung des Hinweises auf die Patenterteilung: **26.08.2015**
(21) Anmeldenummer: 11735833.3
(22) Anmeldetag: 08.07.2011
(51) Int. Cl.: C23C 28/02, C23C 30/00, F01D 25/00, F01D 5/28

(54) **SCHICHTSYSTEM MIT ZWEILAGIGER METALLISCHER SCHICHT**
COATING SYSTEM WITH TWO-PLY METALLIC LAYER
SYSTÈME DE REVÊTEMENT D'UNE COUCHE MÉTALLIQUE À DEUX SOUS-COUCHES

(43) Veröffentlichungstag der Anmeldung: 26.02.2014
(73) Patentinhaber: Siemens Aktiengesellschaft, 80333 München (DE)
(72) Erfinder: BOSTANJOGLO, Georg, 14163 Berlin (DE); KAISER, Axel, 41462 Neuss (DE); STAMM, Werner, 45481 Mülheim an der Ruhr (DE); STEINBACH, Jan, 13353 Berlin (DE); THOMAIDIS, Dimitrios, 14197 Berlin (DE)
(86) Internationale Anmeldenummer: PCT/EP2011/061655
(87) Internationale Veröffentlichungsnummer: WO 2013/007281

(56) Entgegenhaltungen:
- EP-A1- 1 327 702
- WO-A1-2008/074371
- DE-A1- 3 211 583
- US-A- 6 001 492

## Beschreibung

Die Erfindung betrifft eine Schutzschicht zum Schutz eines Bauteils gegen Korrosion und/oder Oxidation insbesondere bei hohen Temperaturen gemäß Anspruch 1.

Schutzschichten für metallische Bauteile, die deren Korrosionsbeständigkeit und/oder Oxidationsbeständigkeit erhöhen sollen, sind im Stand der Technik in großer Zahl bekannt. Die meisten dieser Schutzschichten sind unter dem Sammelnamen MCrAlY bekannt, wobei M für mindestens eines der Elemente aus der Gruppe umfassend Eisen, Kobalt und Nickel steht und weitere wesentliche Bestandteile Chrom, Aluminium und Yttrium sind.

Typische Beschichtungen dieser Art sind aus den US-Patenten 4,005,989 und 4,034,142 bekannt.
Bekannt ist auch die Zugabe von Rhenium (Re) zu NiCoCrAlY-Legierungen.

Die WO 2008/074371 A1 beschreibt ein zweischichtiges Schichtsystem mit einer inneren NiCoCrAlY-Schicht auf einem Substrat oder in der Nähe eines Substrats und einer auf der inneren NiCoCrAlY-Schicht aufgebrachten äußeren Schicht aus Al, Co, Rest Nickel.

Die EP 1 327 702 A1 beschreibt einen beschichteten Gegenstand mit einer inneren MCrAlY-Schicht und einer äußeren MCrAlY-Schicht, wobei die Schichten ein Pt, Pd, Ir, oder Rh aufweisen

Die Bemühung um die Steigerung der Eintrittstemperaturen sowohl bei stationären Gasturbinen als auch bei Flugtriebwerken hat auf dem Fachgebiet der Gasturbinen eine große Bedeutung, da die Eintrittstemperaturen wichtige Bestimmungsgrößen für die mit Gasturbinen erzielbaren thermodynamischen Wirkungsgrade sind. Durch den Einsatz speziell entwickelter Legierungen als Grundwerkstoffe für thermisch hoch zu belastende Bauteile wie Leit- und Laufschaufeln, insbesondere durch den Einsatz einkristalliner Superlegierungen, sind Eintrittstemperaturen von deutlich über 1000°C möglich. Inzwischen erlaubt der Stand der Technik Eintrittstemperaturen von 950°C und mehr bei stationären Gasturbinen sowie 1100°C und mehr in Gasturbinen von Flugtriebwerken.
Beispiele zum Aufbau einer Turbinenschaufel mit einem einkristallinen Substrat, die seinerseits komplex aufgebaut sein kann, gehen hervor aus der WO 91/01433 A1.

Während die physikalische Belastbarkeit der inzwischen entwickelten Grundwerkstoffe für die hoch belasteten Bauteile im Hinblick auf mögliche weitere Steigerungen der Eintrittstemperaturen weitgehend unproblematisch ist, muss zur Erzielung einer hinreichenden Beständigkeit gegen Oxidation und Korrosion auf Schutzschichten zurückgegriffen werden. Neben der hinreichenden chemischen Beständigkeit einer Schutzschicht unter den Angriffen, die von Rauchgasen bei Temperaturen in der Größenordnung von 1000°C zu erwarten sind, muss eine Schutzschicht auch genügend gute mechanische Eigenschaften, nicht zuletzt im Hinblick auf die mechanische Wechselwirkung zwischen der Schutzschicht und dem Grundwerkstoff, haben. Insbesondere muss die Schutzschicht hinreichend duktil sein, um eventuellen Verformungen des Grundwerkstoffes folgen zu können und nicht zu reißen, da auf diese Weise Angriffspunkte für Oxidation und Korrosion geschaffen würden.

Dementsprechend liegt der Erfindung die Aufgabe zugrunde, eine Legierung und eine Schutzschicht anzugeben, die eine gute Hochtemperaturbeständigkeit in Korrosion und Oxidation aufweist, eine gute Langzeitstabilität aufweist und die außerdem einer mechanischen Beanspruchung, die insbesondere in einer Gasturbine bei einer hohen Temperatur zu erwarten ist, besonders gut angepasst ist.

Die Aufgabe wird gelöst durch ein Schichtsystem, das zumindest aufweist:
ein Substrat,
eine zumindest zweischichtige metallische Schicht aus zumindest einer ersten unteren und zweiten oberen Schicht auf der unteren Schicht,
wobei die untere Schicht eine MCrAlX-Legierung aufweist ohne Tantal (Ta) und ohne Silizium (Si) und ohne Eisen (Fe), insbesondere zumindest die folgende Elemente enthält,
ganz insbesondere daraus besteht:
   (Angaben in Gew%):
      24% - 26% Kobalt (Co),
      insbesondere 25%,
      12% - 14% Chrom (Cr),
      insbesondere 13%,
      10% - 12% Aluminium (Al),
      insbesondere 11%
      0,2% - 0,5%,
ganz insbesondere 0,3% zumindest eines Elements aus der Gruppe umfassend Scandium (Sc) und die Elemente der Seltenen Erden, insbesondere Yttrium (Y),
Nickel,
insbesondere Rest Nickel,
wobei die zweite Schicht eine MCrAlX-Legierung aufweist mit Tantal (Ta)
wobei X jeweils optional ist und zumindest eines der Elemente aus der Gruppe umfassend Scandium, Rhenium und die Elemente der Seltenen Erden,
insbesondere Yttrium (Y),
ganz insbesondere nur Yttrium,
bei dem die Legierung der oberen Schicht kein Silizium (Si) enthält.

Weitere Vorteile werden erzielt durch:
- die Legierung der unteren Schicht besteht aus Kobalt (Co), Chrom (Cr), Aluminium (Al), Yttrium (Y) und Nickel (Ni)
- der Gehalt an Tantal (Ta) in der Legierung der oberen Schicht beträgt zwischen 0,1Gew-% to 7,0Gew-%, insbesondere ≥ 1Gew-%
- der Anteil an Tantal (Ta) in der Legierung der oberen Schicht beträgt mindestens 2, 0Gew-%, insbesondere zwischen 3.0Gew-% und 6.0 Gew-% beträgt
- der Anteil an Tantal (Ta) in der Legierung der oberen Schicht beträgt zwischen 4Gew-% und 8Gew-%, insbesondere 5Gew-% - 7Gew-% ganz insbesondere 6Gen-%
- der Gehalt an Kobalt (Co) in der Legierung der oberen Schicht beträgt mindestens 1Gew-%
- die Legierung der oberen Schicht weist mindestens 1Gew-% Chrom (Cr) auf
- die Legierung der unteren Schicht aufweist kein Rhenium (Re)
- der Gehalt an Aluminium (Al) in der Legierung der oberen Schicht beträgt zwischen 5Gew-% - 15Gew-%, insbesondere zwischen 8Gew-% - 12Gew-%
- die Legierung der oberen Schicht weist kein Rhenium (Re) auf
- für die Legierungen der metallische Schichten gilt:
   nicht enthaltend Zirkon (Zr) und/oder
   nicht enthaltend Titan (Ti) und/oder
   nicht enthaltend Gallium (Ga) und/oder
   nicht enthaltend Germanium (Ge)
- die jeweilige Legierung der Schichten weisen kein Hafnium (Hf) auf
- die Legierung der oberen Schicht ist nickelbasiert
- die Legierung der unteren Schicht ist nickelbasiert
- die Legierung der oberen Schicht weist mindestens 1Gew-% Aluminium (Al) auf
- die Legierung der oberen Schicht (10) weist mindestens 0,1Gew-% Yttrium (Y) auf, insbesondere 0,3Gew-% beträgt, insbesondere zwischen 0,1Gew-% und 0,7Gew-%
- der Gehalt an Kobalt (Co) in der Legierung der oberen Schicht beträgt zwischen 15Gew-% - 30Gew-%, insbesondere 18Gew-% - 27Gew-%, ganz insbesondere zwischen 21Gew-% - 24Gew-%
- der Gehalt an Chrom (Cr) in der Legierung der oberen Schicht beträgt zwischen 12Gew-% - 22Gew-%, insbesondere zwischen 15Gew-% - 19Gew-%
- die obere Schicht weist eine Legierung aus Nickel (Ni), Kobalt (Co), Aluminium (Al), Chrom (Cr), Tantal (Ta) und optional Yttrium (Y) auf, insbesondere besteht daraus
- die obere Schicht weist eine Legierung aus Nickel (Ni), Kobalt (Co), Aluminium (Al), Chrom (Cr), Tantal (Ta), Eisen (Fe) und optional Yttrium (Y) auf, insbesondere besteht daraus
- die obere Schicht weist eine Legierung aus Nickel (Ni), Kobalt (Co), Aluminium (Al), Chrom (Cr), Tantal (Ta) und
   Yttrium (Y) auf
   insbesondere besteht daraus
- die obere Schicht weist eine Legierung aus Nickel (Ni), Kobalt (Co), Aluminium (Al), Chrom (Cr), Tantal (Ta), Eisen (Fe) und Yttrium (Y) auf insbesondere besteht daraus
- die Legierung der Schichten (7, 10) weist kein Eisen (Fe) auf
- der Anteil an Eisen (Fe) in der Legierung der oberen Schicht zwischen 0,5Gew-% - 5,0Gew-%, insbesondere beträgt zwischen 1,0Gew-% - 4,0Gew-% und ganz insbesondere 2,7Gew-%
- der Gehalt an Chrom (Cr) in der Legierung der oberen Schicht beträgt zwischen 12Gew-% - 16Gew-%, insbesondere 14,4Gew-%
- der Anteil an Aluminium (Al) in der Legierung der oberen Schicht beträgt zwischen 7Gew-% - 8Gew-%, insbesondere 7,75Gew-%
- der Anteil von Rhenium (Re) in der Legierung der oberen Schicht beträgt 0.1Gew-% - 2Gew-%
- der Gehalt an Tantal (Ta) in der Legierung der oberen Schicht beträgt zwischen 5Gew-% and 6.8Gew-%
- die Legierung der metallischen Schichten enthält kein Platin (Pt)
- der Gehalt an Kobalt (Co) in der Legierung der oberen Schicht beträgt zwischen 11Gew-% - 14.5Gew-%
- der Gehalt an Chrom (Cr) in der Legierung der oberen Schicht beträgt zwischen 14t% - 16Gew-%
- der Gehalt an Aluminium (Al) in der Legierung der oberen Schicht beträgt zwischen 9Gew-% - 13Gew-%
- der Gehalt an Yttrium (Y) in der Legierung der oberen Schicht beträgt zwischen 0.1Gew-% - 0.7Gew-%
- die Legierung der oberen Schicht weist Tantal (Ta) zwischen 4Gew-% und 7.5Gew-% auf, insbesondere zwischen 3.0Gew-% to 6.0Gew-%
- der Gehalt an Tantal (Ta) in der Legierung der oberen Schicht beträgt zwischen 3.5Gew-% und 5.5Gew-%, insbesondere 4.5Gew-%
- der Gehalt von Kobalt (Co) in der Legierung der oberen Schicht liegt zwischen 21Gew-% - 25Gew-, insbesondere zwischen 22Gew-% - 23.5Gew-%, ganz insbesondere 23Gew-%
- der Gehalt an Chrom (Cr) in der Legierung der oberen Schicht beträgt zwischen 18Gew-% - 22Gew-%
- die obere Schicht weist kein Yttrium (Y) auf
- der Gehalt an Aluminium (Al) in der Legierung der oberen Schicht beträgt zwischen 8Gew-% - 12Gew-%
- der Gehalt an Yttrium (Y) in der Legierung der oberen Schicht beträgt zwischen 0.1Gew-% - 0.7Gew-%

Diese oben aufgelisteten Maßnahmen können beliebig miteinander verknüpft werden, um weitere Vorteile zu erzielen.

In den Unteransprüchen sind weitere vorteilhafte Maßnahmen aufgelistet, die beliebig in vorteilhafter Art und Weise miteinander verknüpft werden können.

Die Erfindung wird im Folgenden näher erläutert.

Es zeigen
- Figur 1: ein Schichtsystem mit einer Schutzschicht,
- Figur 2: Zusammensetzungen von Superlegierungen,
- Figur 3: eine Gasturbine,
- Figur 4: eine Turbinenschaufel und
- Figur 5: eine Brennkammer.

Die Figuren und die Beschreibung stellen nur Ausführungsbeispiele der Erfindung dar.

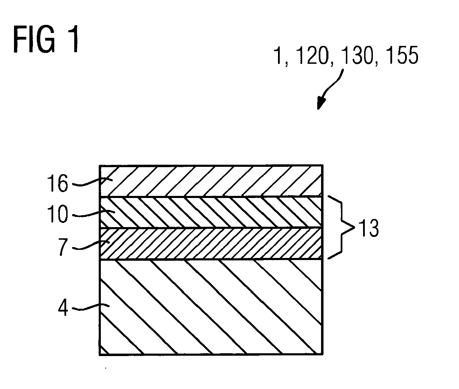

Erfindungsgemäß weist das Schichtsystem 1, 120, 130, 155 (Fig. 1) zum Schutz eines Bauteils mit einem Substrat 4 gegen Korrosion und Oxidation bei einher hohen Temperatur mit folgendes auf:
eine zweischichtige metallische Schicht 7, 10 aus zumindest einer ersten unteren und zweiten oberen 10 Schicht,
wobei die untere Schicht 7 eine MCrAl-Legierung aufweist ohne Tantal Ta und ohne Silizium (Si) und ohne Eisen (Fe),
insbesondere die folgende Elemente enthält
(Angaben in Gew%):
   24% - 26% Kobalt (Co),
   insbesondere 25%,
   12% - 14% Chrom (Cr),
   insbesondere 13%,
   10% - 12% Aluminium (Al),
   insbesondere 11%
   0,2% - 0,5%,
ganz insbesondere 0,3%
zumindest eines Elements aus der Gruppe umfassend Scandium und die Elemente der Seltenen Erden,
insbesondere Yttrium (Y),
Nickel,
insbesondere Rest Nickel,
wobei die zweite Schicht 10 eine MCrAl-Legierung aufweist mit Tantal (Ta).

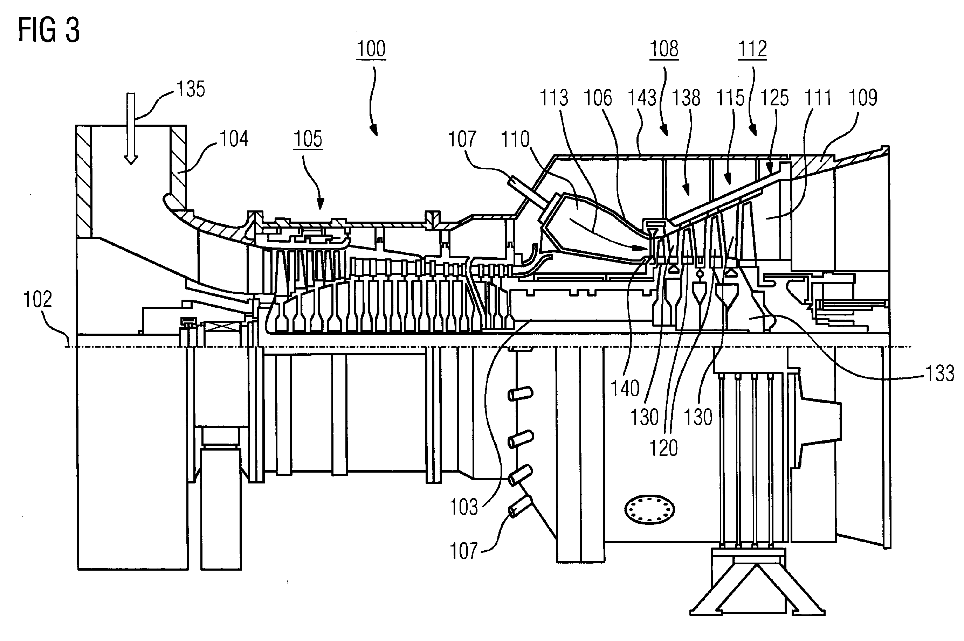

Die Schutzschicht 13 weist bei guter Korrosionsbeständigkeit eine besonders gute Beständigkeit gegen Oxidation auf und zeichnet sich auch durch besonders gute Duktilitätseigenschaften aus, so dass sie besonders qualifiziert ist für die Anwendung in einer Gasturbine 100 (Fig. 3) bei einer weiteren Steigerung der Eintrittstemperatur.

Die Schutzschicht 13 weist eine untere MCrAlX-Schicht 7 und eine äußere Schicht 10 auf, die 10 eine McrAlx-Legierung mit Tantal (Ta) aufweist. X ist optional und vorzugsweise Scandium, Gruppe der Seltenen Erden, insbesondere Yttrium und/oder Rhenium.
Auf Rhenium (Re), das häufig verwendet wird, kann in der unteren Schicht 7 verzichtet werden, so dass sich keine spröden Rheniumphasen bilden, die die Duktilität der unteren Schicht 7 herabsetzen könnten.

Die untere Schicht 7 ist eine reine NiCoCrAl-Schicht, also ohne Zusätze von Tantal und/oder Eisen, wobei die äußere Schicht 10 den Zusatz von Tantal zur Einstellung von Phasen, Phasenübergang für guten Oxidationsschutz aufweist.

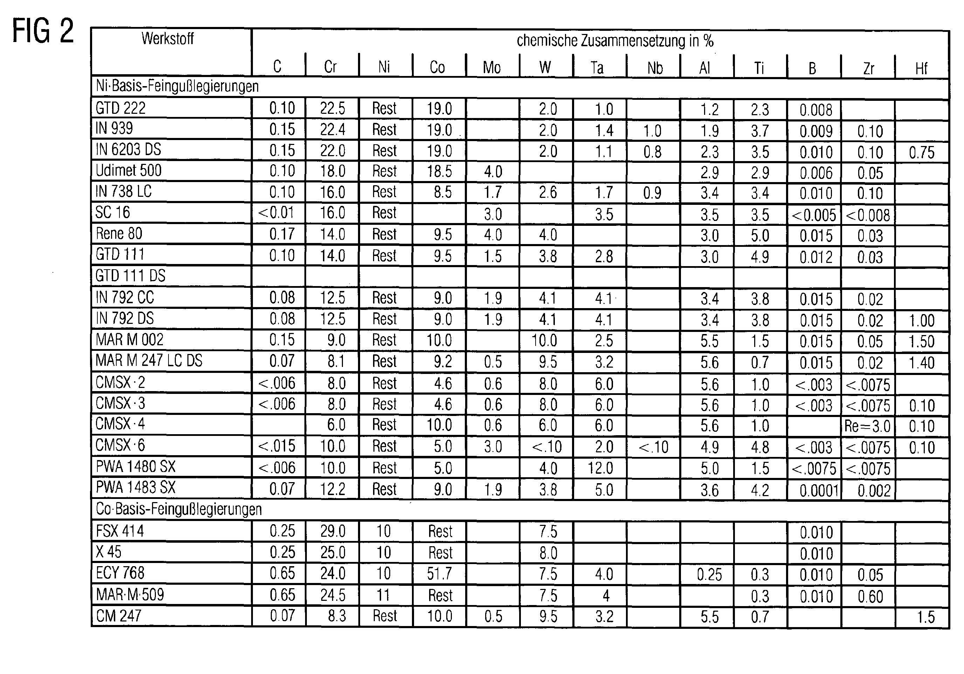

Die untere Schicht 7 ist in ihrer Zusammensetzung vorzugsweise relativ eng gesetzt und an Nickel oder Kobalt Superlegierungen, insbesondere gemäß Figur 2 angepasst bzw. zur gleichen Ausdehnung und guten Haftung. Ihre Duktilität ist deutlich höher, mindestens 10%, insbesondere 20%, ausgeprägt ist als die der äußeren metallischen Schicht 10.

Daher kann die äußere Schicht 10 äußerst variabel, deutlich unabhängiger von der Zusammensetzung des Substrats (4) und je nach Anwendung ohne Kompromisse gestaltet werden: hoher Temperatureinsatz (mit schnellen Oxidwachstum) oder mittlere Temperaturen und langer oxidationsschutz:
Ni-13Co-15Cr-11Al (4,5 - 6)Ta, -0,3 Y.

Die äußere Schicht 10 weist einen hervorragenden Oxidationsschutz auf, hingegen die untere Schicht eine sehr hohe Zähigkeit und schützt so das Substrat 4, das dann für einen Neueinsatz fehlerfrei wiederverwendet werden kann.

Die Pulver werden beispielsweise durch Plasmaspritzen aufgebracht (APS, LPPS, VPS, ...). Andere Verfahren sind ebenso denkbar (PVD, CVD, Kaltgasspritzen, ...).

Die beschriebene Schutzschicht 13 wirkt auch als Haftvermittlerschicht zu einer Superlegierung.
Auf diese Schutzschicht 7 können weitere Schichten, insbesondere keramische Wärmedämmschichten 16 aufgebracht werden.

Bei einem Bauteil 1, 120, 130 ist die Schutzschicht 13 vorteilhafterweise aufgetragen auf ein Substrat 4 aus einer Superlegierung auf Nickel- oder Kobaltbasis, insbesondere gemäß Figur 2.

Zusammensetzungen dieser Art sind als Gusslegierungen unter den Bezeichnungen GTD222, IN939, IN6203 und Udimet 500 bekannt.
Weitere Alternativen für das Substrat 4 des Bauteils 1, 120, 130, 155 sind in der Figur 2 aufgelistet.

Die Dicke der Schutzschicht 13 auf dem Bauteil 1 wird vorzugsweise auf einen Wert zwischen etwa 100µm und 300µm bemessen.

Die Schutzschicht 13 eignet sich besonders zum Schutz des Bauteils 1, 120, 130, 155 gegen Korrosion und Oxidation, während das Bauteil bei einer Materialtemperatur um etwa 950°C, bei Flugturbinen auch um etwa 1100°C; mit einem Rauchgas beaufschlagt wird.

Die Schutzschicht 13 gemäß der Erfindung ist damit besonders qualifiziert zum Schutz eines Bauteils einer Gasturbine 100, insbesondere einer Leitschaufel 120, Laufschaufel 130 oder eines Hitzeschildelements 155, das mit heißem Gas vor oder in der Turbine der Gasturbine 100 oder der Dampfturbine beaufschlagt wird.
Die Schutzschicht 13 kann als overlay (Schutzschicht ist die äußere Schicht oder als Bondcoat (Schutzschicht ist eine Zwischenschicht) verwendet werden.

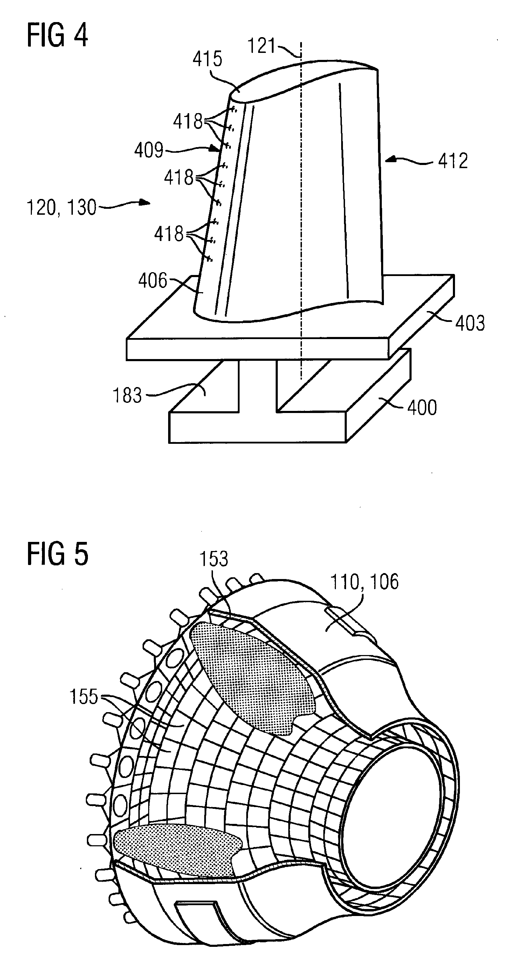

Figur 1 zeigt als ein Bauteil ein Schichtsystem 1.
Das Schichtsystem 1 weist ein Substrat 4 auf.
Das Substrat 4 kann metallisch und/oder keramisch sein. Insbesondere bei Turbinenbauteilen, wie z.B. Turbinenlauf- 120 (Fig. 4) oder -leitschaufeln 130 (Fig. 3, 4), Hitzeschildelementen 155 (Fig. 5) sowie anderen Gehäuseteilen einer Dampfoder Gasturbine 100 (Fig. 3), weist das Substrat 4 eine nickel-, kobalt-basierten Superlegierung auf, insbesondere bestehend daraus.
Vorzugsweise werden nickelbasierte Superlegierungen verwendet.

Auf dem Substrat 4 ist die erfindungsgemäße Schutzschicht 13 vorhanden.
Vorzugsweise wird diese Schutzschicht 13 durch Plasmaspritzen (VPS, LPPS, APS1, ...) aufgebracht.
Diese kann als äußere Schicht (nicht dargestellt) oder Zwischenschicht (Fig. 1) verwendet werden.
Im letzteren Fall ist auf der Schutzschicht 13 eine keramische Wärmedämmschicht 16 vorhanden.

Eine Aluminiumoxidschicht bildet sich während des Betriebs auf der metallischen Schicht 13 und/oder bei der Auftragung der keramischen Schicht 16.

Die Schutzschicht 13 kann auf neu hergestellte Bauteile und wieder aufgearbeitete Bauteile aus dem Refurbishment aufgebracht werden.
Wiederaufarbeitung (Refurbishment) bedeutet, dass Bauteile 1 nach ihrem Einsatz gegebenenfalls von Schichten (Wärmedämmschicht) getrennt werden und Korrosions- und Oxidationsprodukte entfernt werden, beispielsweise durch eine Säurebehandlung (Säurestrippen). Gegebenenfalls müssen noch Risse repariert werden. Danach kann ein solches Bauteil wieder beschichtet werden, da das Substrat 4 sehr teuer ist.

Die Figur 3 zeigt beispielhaft eine Gasturbine 100 in einem Längsteilschnitt. Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 erfindungsgemäße Schutzschichten 7 gegen Korrosion oder Oxidation aufweisen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten 7 können ähnlich der Turbinenschaufeln sein.
Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem (1)
zumindest aufweisend:
ein Substrat (4),
eine zumindest zweischichtige metallische Schicht (7, 10) aus zumindest einer ersten unteren (7) und
zweiten oberen (10) Schicht auf der unteren Schicht (7),
wobei die untere Schicht (7)
eine MCrAlX-Legierung aufweist
ohne Tantal (Ta) und ohne Silizium (Si) und ohne Eisen (Fe),
insbesondere zumindest die folgende Elemente enthält,
ganz insbesondere daraus besteht:
(Angaben in Gew%):
24% - 26% Kobalt (Co),
insbesondere 25%,
12% - 14% Chrom (Cr),
insbesondere 13%,
10% - 12% Aluminium (Al),
insbesondere 11%
0,2% - 0,5%,
ganz insbesondere 0,3% zumindest eines Elements aus der Gruppe umfassend Scandium (Sc) und die Elemente der Seltenen Erden,
insbesondere Yttrium (Y),
Nickel,
insbesondere Rest Nickel,
wobei die zweite Schicht (10) eine MCrAlX-Legierung aufweist,
mit Tantal (Ta),
wobei X jeweils optional ist und zumindest eines der Element aus der Gruppe umfassend Scandium (Sc), Rhenium (Re) und die Elemente der Seltenen Erden, insbesondere Yttrium (Y),
ganz insbesondere nur Yttrium (Y),
bei dem die Legierung der oberen Schicht (10) kein Silizium (Si) enthält.

2. Schichtsystem nach Anspruch 1,
bei dem die Legierung der unteren Schicht (7) aus Kobalt (Co), Chrom (Cr), Aluminium (Al), Yttrium (Y) und Nickel (Ni) besteht.

3. Schichtsystem nach einem oder beiden der Ansprüchen 1 oder 2,
bei dem in der Legierung der oberen Schicht (10) der Gehalt an Tantal (Ta) zwischen 0,1Gew-% und 7,0Gew-%, insbesondere ≥ 1Gew-%
beträgt.

4. Schichtsystem nach einem oder mehreren der vorherigen Ansprüche,
bei dem der Anteil an Tantal (Ta) in der Legierung der oberen Schicht (10) mindestens 2,0Gew-% beträgt, insbesondere zwischen 3.0Gew-% und 6.0 Gew-% beträgt.

5. Schichtsystem nach einem oder beiden der Ansprüche 1 oder 2,
bei dem der Anteil an Tantal (Ta) in der Legierung der oberen Schicht (10) zwischen 4Gew-% und 8Gew-%, insbesondere 5Gew-% - 7Gew-%;
ganz insbesondere 6Gew-% beträgt.

6. Schichtsystem nach einem oder mehreren der vorherigen Ansprüche,
bei dem in der Legierung der oberen Schicht (10) der Gehalt an Kobalt (Co) mindestens 1Gew-% beträgt.

7. Schichtsystem nach einem oder mehreren der vorherigen Ansprüche,
bei dem die Legierung der oberen Schicht (10) mindestens 1Gew-% Chrom (Cr) aufweist.

8. Schichtsystem nach einem oder mehreren der vorherigen Ansprüche,
das in der Legierung der unteren Schicht (7) kein Rhenium (Re) aufweist.

9. Schichtsystem nach einem oder mehreren der vorherigen Ansprüche,
bei dem der Gehalt an Aluminium (Al) in der Legierung der oberen Schicht (10) zwischen 5Gew-% - 15Gew-%, insbesondere zwischen 8Gew-% - 12Gew-% beträgt.

10. Schichtsystem nach einem oder mehreren der vorherigen Ansprüche,
das in der Legierung der oberen Schicht (10) kein Rhenium (Re) aufweist.

11. Schichtsystem nach einem oder mehreren der vorherigen Ansprüche,
bei dem für die Legierungen der metallische Schichten (7, 10) gilt:
nicht enthaltend Zirkon (Zr) und/oder
nicht enthaltend Titan (Ti) und/oder
nicht enthaltend Gallium (Ga) und/oder
nicht enthaltend Germanium (Ge).

12. Schichtsystem nach einem oder mehreren der vorherigen Ansprüche,
bei dem die jeweilige Legierung der Schichten (7, 10) kein Hafnium (Hf) aufweist.

13. Schichtsystem nach einem oder mehreren der vorherigen Ansprüche,
bei dem die Legierung der oberen Schicht (10) nickelbasiert ist.

14. Schichtsystem nach einem oder mehreren der vorherigen Ansprüche,
bei dem die Legierung der unteren Schicht (7) nickelbasiert ist.

15. Schichtsystem nach einem oder mehreren der vorherigen Ansprüche,
bei dem die Legierung der oberen Schicht (10) mindestens 1Gew-% Aluminium (Al) aufweist.

16. Schichtsystem nach einem oder mehreren der vorherigen Ansprüche,
bei dem die Legierung der oberen Schicht (10) mindestens 0,1Gew-% Yttrium (Y) aufweist,
insbesondere zwischen 0,1Gew-% und 0,7Gew-%,
ganz insbesondere 0,3Gew-% aufweist.

17. Schichtsystem nach einem oder mehreren der vorherigen Ansprüche,
bei dem der Gehalt an Kobalt (Co) in der Legierung der oberen Schicht (10) zwischen 15Gew-% und 30Gew-%, insbesondere 18Gew-% und 27Gew-%,
ganz insbesondere zwischen 21Gew-% und 24Gew-% beträgt.

18. Schichtsystem nach einem oder mehreren der vorherigen Ansprüche,
bei dem der Gehalt an Chrom (Cr) in der Legierung der oberen Schicht (10) zwischen 12Gew-% - 22Gew-%, insbesondere zwischen 15Gew-% - 19Gew-% beträgt.

19. Schichtsystem nach einem oder mehreren der vorherigen Ansprüche,
welches in der oberen Schicht (10) die β-Phase enthält, insbesondere mindestens 5vol%.

20. Schichtsystem nach einem oder mehreren der vorherigen Ansprüche,
bei dem die obere Schicht (10) eine Legierung aus Nickel (Ni), Kobalt (Co), Aluminium (Al), Chrom (Cr), Tantal (Ta) und optional Yttrium (Y) aufweist,
insbesondere daraus besteht.

21. Schichtsystem nach einem oder mehreren der vorherigen Ansprüche,
bei dem die obere Schicht (10) eine Legierung aus Nickel (Ni), Kobalt (Co), Aluminium (Al), Chrom (Cr), Tantal (Ta) und Yttrium (Y) aufweist,
insbesondere daraus besteht.

22. Schichtsystem nach einem oder mehreren der vorherigen Ansprüche,
bei dem der Gehalt an Chrom (Cr) in der Legierung der oberen Schicht (10) zwischen 12Gew-% - 16Gew-% beträgt, insbesondere 14,4Gew-%.

23. Schichtsystem nach einem oder mehreren der vorherigen Ansprüche,
bei dem der Anteil an Aluminium (Al) in der Legierung der oberen Schicht (10) zwischen 7Gew-% und 8Gew-% beträgt,
insbesondere 7,75Gew-%.

24. Schichtsystem nach einem oder mehreren der vorherigen Ansprüche,
bei der der Anteil von Rhenium (Re) in der Legierung der oberen Schicht (10) 0.1Gew-% und 2Gew-% beträgt.

25. Schichtsystem nach einem oder mehreren der vorherigen Ansprüche,
bei dem der Gehalt an Tantal (Ta) in der Legierung der oberen Schicht (10) zwischen 5Gew-% und 6.8Gew-% beträgt.

26. Schichtsystem nach einem oder mehreren der vorherigen Ansprüche,
bei dem die Legierung der metallischen Schichten (7, 10) kein Platin (Pt) enthält.

27. Schichtsystem nach einem oder mehreren der vorherigen Ansprüche,
bei dem der Gehalt an Kobalt (Co) in der Legierung der oberen Schicht (10) zwischen 11.0Gew-% - 14.5Gew-% beträgt.

28. Schichtsystem nach einem oder mehreren der vorherigen Ansprüche,
bei dem der Gehalt an Chrom (Cr) in der Legierung der oberen Schicht (10) zwischen 14t% und 16Gew-% beträgt.

29. Schichtsystem nach einem oder mehreren der vorherigen Ansprüche,
bei dem der Gehalt an Aluminium (Al) in der Legierung der oberen Schicht (10) zwischen 9Gew-% und 13Gew-% beträgt.

30. Schichtsystem nach einem oder mehreren der vorherigen Ansprüche,
bei dem der Gehalt an Yttrium (Y) in der Legierung der oberen Schicht (10) zwischen 0.1Gew-% und 0.7Gew-% beträgt.

31. Schichtsystem nach einem oder mehreren der vorherigen Ansprüche,
bei dem die Legierung der oberen Schicht (10) Tantal (Ta) zwischen 4Gew-% und 7.5Gew-% aufweist, insbesondere zwischen 3.0Gew-% und 6.0Gew-% aufweist.

32. Schichtsystem nach einem oder mehreren der vorherigen Ansprüche,
bei dem der Gehalt an Tantal (Ta) in der Legierung der oberen Schicht (10) zwischen 3.5Gew-% und 5.5Gew-% beträgt,
insbesondere 4.5Gew-% aufweist.

33. Schichtsystem nach einem oder mehreren der vorherigen Ansprüche,
bei dem der Gehalt von Kobalt. (Co) in der Legierung der oberen Schicht liegt zwischen 21Gew-% und 25Gew-, insbesondere zwischen 22Gew-% und 23.5Gew-%,
ganz insbesondere 23Gew-%.

34. Schichtsystem nach einem oder mehreren der vorherigen Ansprüche,
bei dem der Gehalt an Chrom (Cr) in der Legierung der oberen Schicht (10) zwischen 18Gew-% und 22Gew-% beträgt.

35. Schichtsystem nach einem oder mehreren der vorherigen Ansprüche,
bei dem die obere Schicht (10) kein Yttrium (Y) aufweist.

36. Schichtsystem nach einem oder mehreren der vorherigen Ansprüche,
bei dem der Gehalt an Aluminium (Al) in der Legierung der oberen Schicht (10) zwischen 8Gew-% und 12Gew-% beträgt.

37. Schichtsystem nach einem oder mehreren der vorherigen Ansprüche,
bei dem der Gehalt an Yttrium (Y) in der Legierung der oberen Schicht (10) zwischen 0.1Gew-% und 0.7Gew-% beträgt.

38. Schichtsystem nach einem oder mehreren der vorherigen Ansprüche,
insbesondere ein Bauteil (120, 130, 155) einer Gasturbine (100),
ganz insbesondere bei dem ein Substrat (4) des Schichtsystems (120, 130, 155) nickelbasiert oder kobaltbasiert ist,
bei dem auf der Schutzschicht (10) eine keramische Wärmedämmschicht (16) aufgebracht ist.

## Claims

1. Layer system (1)
at least comprising:
a substrate (4),
an at least two-layered metallic layer (7, 10) consisting of at least a first bottom layer (7) and
a second top layer (10) on the bottom layer (7),
wherein the bottom layer (7)
comprises an MCrAlX alloy
without tantalum (Ta) and without silicon (Si) and without iron (Fe),
in particular contains at least the following elements,
very particularly consists thereof:
(amounts in % by weight):
24% - 26% cobalt (Co),
in particular 25%,
12% - 14% chromium (Cr),
in particular 13%,
10% - 12% aluminum (Al),
in particular 11%,
0.2% - 0.5%,
very particularly 0.3% of at least one element from the group comprising scandium (Sc) and the rare earth elements,
in particular yttrium (Y),
nickel,
in particular remainder nickel,
wherein the second layer (10) comprises an MCrAlX alloy, with tantalum (Ta),
where X is in each case optional and is at least one of the elements from the group comprising scandium (Sc), rhenium (Re) and the rare earth elements,
in particular yttrium (Y),
very particularly only yttrium (Y),
in which the alloy of the top layer (10) contains no silicon (Si).

2. Layer system according to Claim 1,
in which the alloy of the bottom layer (7) consists of cobalt (Co), chromium (Cr), aluminum (Al), yttrium (Y) and nickel (Ni).

3. Layer system according to either or both of Claims 1 and 2,
in which the content of tantalum (Ta) in the alloy of the top layer (10) is between 0.1% by weight and 7.0% by weight,
in particular is ≥ 1% by weight.

4. Layer system according to one or more of the preceding claims,
in which the proportion of tantalum (Ta) in the alloy of the top layer (10) is at least 2.0% by weight,
in particular is between 3.0% by weight and 6.0% by weight.

5. Layer system according to either or both of Claims 1 and 2,
in which the proportion of tantalum (Ta) in the alloy of the top layer (10) is between 4% by weight and 8% by weight,
in particular is 5% by weight - 7% by weight,
very particularly is 6% by weight.

6. Layer system according to one or more of the preceding claims,
in which the content of cobalt (Co) in the alloy of the top layer (10) is at least 1% by weight.

7. Layer system according to one or more of the preceding claims,
in which the alloy of the top layer (10) comprises at least 1% by weight chromium (Cr).

8. Layer system according to one or more of the preceding claims,
which in the alloy of the bottom layer (7) comprises no rhenium (Re).

9. Layer system according to one or more of the preceding claims,
in which the content of aluminum (Al) in the alloy of the top layer (10) is between 5% by weight - 15% by weight,
in particular is between 8% by weight - 12% by weight.

10. Layer system according to one or more of the preceding claims,
which in the alloy of the top layer (10) comprises no rhenium (Re).

11. Layer system according to one or more of the preceding claims,
in which the following holds true for the alloys of the metallic layers (7, 10):
not containing zirconium (Zr) and/or
not containing titanium (Ti) and/or
not containing gallium (Ga) and/or
not containing germanium (Ge).

12. Layer system according to one or more of the preceding claims,
in which the respective alloy of the layers (7, 10) comprises no hafnium (Hf).

13. Layer system according to one or more of the preceding claims,
in which the alloy of the top layer (10) is nickel-based.

14. Layer system according to one or more of the preceding claims,
in which the alloy of the bottom layer (7) is nickel-based.

15. Layer system according to one or more of the preceding claims,
in which the alloy of the top layer (10) comprises at least 1% by weight aluminum (Al).

16. Layer system according to one or more of the preceding claims,
in which the alloy of the top layer (10) comprises at least 0.1% by weight,
in particular comprises between 0.1% by weight and 0.7% by weight,
very particularly comprises 0.3% by weight, yttrium (Y).

17. Layer system according to one or more of the preceding claims,
in which the content of cobalt (Co) in the alloy of the top layer (10) is between 15% by weight and 30% by weight, in particular is between 18% by weight and 27% by weight, very particularly is between 21% by weight and 24% by weight.

18. Layer system according to one or more of the preceding claims,
in which the content of chromium (Cr) in the alloy of the top layer (10) is between 12% by weight - 22% by weight, in particular is between 15% by weight - 19% by weight.

19. Layer system according to one or more of the preceding claims,
which in the top layer (10) contains the β phase,
in particular at least 5% by volume.

20. Layer system according to one or more of the preceding claims,
in which the top layer (10) comprises an alloy consisting of nickel (Ni), cobalt (Co), aluminum (Al), chromium (Cr), tantalum (Ta) and optionally yttrium (Y),
in particular consists thereof.

21. Layer system according to one or more of the preceding claims,
in which the top layer (10) comprises an alloy consisting of nickel (Ni), cobalt (Co), aluminum (Al), chromium (Cr), tantalum (Ta) and yttrium (Y),
in particular consists thereof.

22. Layer system according to one or more of the preceding claims,
in which the content of chromium (Cr) in the alloy of the top layer (10) is between 12% by weight - 16% by weight, in particular is 14.4% by weight.

23. Layer system according to one or more of the preceding claims,
in which the proportion of aluminum (Al) in the alloy of the top layer (10) is between 7% by weight and 8% by weight,
in particular is 7.75% by weight.

24. Layer system according to one or more of the preceding claims,
in which the proportion of rhenium (Re) in the alloy of the top layer (10) is between 0.1% by weight and 2% by weight.

25. Layer system according to one or more of the preceding claims,
in which the content of tantalum (Ta) in the alloy of the top layer (10) is between 5% by weight and 6.8% by weight.

26. Layer system according to one or more of the preceding claims,
in which the alloy of the metallic layers (7, 10) contains no platinum (Pt).

27. Layer system according to one or more of the preceding claims,
in which the content of cobalt (Co) in the alloy of the top layer (10) is between 11.0% by weight - 14.5% by weight.

28. Layer system according to one or more of the preceding claims,
in which the content of chromium (Cr) in the alloy of the top layer (10) is between 14% by weight and 16% by weight.

29. Layer system according to one or more of the preceding claims,
in which the content of aluminum (Al) in the alloy of the top layer (10) is between 9% by weight and 13% by weight.

30. Layer system according to one or more of the preceding claims,
in which the content of yttrium (Y) in the alloy of the top layer (10) is between 0.1% by weight and 0.7% by weight.

31. Layer system according to one or more of the preceding claims,
in which the alloy of the top layer (10) comprises between 4% by weight and 7.5% by weight,
in particular comprises between 3.0% by weight and 6.0% by weight, tantalum (Ta).

32. Layer system according to one or more of the preceding claims,
in which the content of tantalum (Ta) in the alloy of the top layer (10) is between 3.5% by weight and 5.5% by weight,
in particular is 4.5% by weight.

33. Layer system according to one or more of the preceding claims,
in which the content of cobalt (Co) in the alloy of the top layer is between 21% by weight and 25% by weight,
in particular is between 22% by weight and 23.5% by weight,
very particularly is 23% by weight.

34. Layer system according to one or more of the preceding claims,
in which the content of chromium (Cr) in the alloy of the top layer (10) is between 18% by weight and 22% by weight.

35. Layer system according to one or more of the preceding claims,
in which the top layer (10) comprises no yttrium (Y).

36. Layer system according to one or more of the preceding claims,
in which the content of aluminum (Al) in the alloy of the top layer (10) is between 8% by weight and 12% by weight.

37. Layer system according to one or more of the preceding claims,
in which the content of yttrium (Y) in the alloy of the top layer (10) is between 0.1% by weight and 0.7% by weight.

38. Layer system according to one or more of the preceding claims,
in particular a component (120, 130, 155) of a gas turbine (100),
very particularly in which a substrate (4) of the layer system (120, 130, 155) is nickel-based or cobalt-based,
in which a ceramic thermal barrier coating (16) is applied to the protective layer (10).

## Revendications

1. Système (1) stratifié
comportant au moins :
un substrat (4),
une couche (7, 10) métallique en au moins deux strates,
composée d'au moins une première strate (7) inférieure et d'une deuxième strate (10) supérieure sur la strate (7) inférieure,
la strate (7) inférieure
ayant un alliage de MCrAlX,
sans tantale (Ta) et sans silicium (Si) et sans fer (Fe), contenant, notamment au moins, les éléments suivants,
et d'une manière tout à fait particulière, en étant constituée :
(indications en% en poids) :
de 24% à 26% de cobalt (Co),
notamment 25%,
de 12% à 14% de chrome (Cr),
notamment 13%,
de 10% à 12% d'aluminium (Al),
notamment 11%,
de 0,2% à 0,5%,
d'une manière tout à fait particulière, 0,3% d'au moins un élément du groupe comprenant le scandium (Sc) et les éléments des terres rares,
notamment de l'yttrium (Y),
du nickel,
notamment le reste étant du nickel,
dans lequel la deuxième strate (10) a un alliage de MCrAlX,
ayant du tantale (Ta),
dans lequel X est respectivement facultatif et au moins l'un des éléments du groupe comprenant du scandium (Sc),
du rhénium (Re) et les éléments des terres rares,
notamment de l'yttrium (Y),
d'une manière tout à fait particulière, seulement de l'yttrium (Y),
dans lequel l'alliage de la strate (10) supérieure ne contient pas de silicium (Si).

2. Système stratifié suivant la revendication 1,
dans lequel l'alliage de la strate (7) inférieure est constitué de cobalt (Co), de chrome (Cr), d'aluminium (Al), d'yttrium (Y) et de nickel (Ni).

3. Système stratifié suivant l'une ou les deux des revendications 1 ou 2,
dans lequel, dans l'alliage de la strate (10) supérieure, la teneur en tantale (Ta) est comprise entre 0,1% en poids et 7,0% en poids,
en étant notamment ≥ 1% en poids.

4. Système stratifié suivant l'une ou plusieurs des revendications précédentes,
dans lequel la proportion de tantale (Ta) de l'alliage de la strate (10) supérieure s'élève à au moins 2,0% en poids,
en étant comprise notamment entre 3,0% en poids et 6,0% en poids.

5. Système stratifié suivant l'une ou les deux des revendications 1 ou 2,
dans lequel la proportion de tantale (Ta) de la strate (10) supérieure est comprise entre 4% en poids et 8% en poids,
notamment entre 5% en poids et 7% en poids,
en étant d'une manière tout à fait particulière égale à 6% en poids.

6. Système stratifié suivant l'une ou plusieurs des revendications précédentes,
dans lequel, dans l'alliage de la strate (10) supérieure, la teneur en cobalt (Co) est d'au moins 1% en poids.

7. Système stratifié suivant l'une ou plusieurs des revendications précédentes,
dans lequel l'alliage de la strate (10) supérieure comprend au moins 1% en poids de chrome (Cr).

8. Système stratifié suivant l'une ou plusieurs des revendications précédentes,
qui n'a pas de rhénium (Re) dans l'alliage de la strate (7) inférieure.

9. Système stratifié suivant l'une ou plusieurs des revendications précédentes,
dans lequel la teneur en aluminium (Al) de l'alliage de la strate (10) supérieure est comprise entre 5% en poids et 15% en poids,
en étant notamment comprise entre 8% en poids et 12% en poids.

10. Système stratifié suivant l'une ou plusieurs des revendications précédentes,
qui n'a pas de rhénium (Re) dans l'alliage de la strate (10) supérieure.

11. Système stratifié suivant l'une ou plusieurs des revendications précédentes,
dans lequel, pour les alliages des strates (7, 10) métalliques, on a :
ne contenant pas de zirconium (Zr) et/ou
ne contenant pas de titane (Ti) et/ou
ne contenant pas de gallium (Ga) et/ou
ne contenant pas de germanium (Ge).

12. Système stratifié suivant l'une ou plusieurs des revendications précédentes,
dans lequel l'alliage respectif des strates (7, 10) n'a pas d'hafnium (Hf).

13. Système stratifié suivant l'une ou plusieurs des revendications précédentes,
dans lequel l'alliage de la strate (10) supérieure est à base de nickel.

14. Système stratifié suivant l'une ou plusieurs des revendications précédentes,
dans lequel l'alliage de la strate (7) inférieure est à base de nickel.

15. Système stratifié suivant l'une ou plusieurs des revendications précédentes,
dans lequel l'alliage de la strate (10) supérieure a au moins 1% en poids d'aluminium (Al).

16. Système stratifié suivant l'une ou plusieurs des revendications précédentes,
dans lequel l'alliage de la strate (10) supérieure a au moins 0,1% en poids d'yttrium (Y),
notamment entre 0,1% en poids et 0,7% en poids,
d'une manière tout à fait particulière, 0,3% en poids.

17. Système stratifié suivant l'une ou plusieurs des revendications précédentes,
dans lequel la teneur en cobalt (Co) de l'alliage de la strate (10) supérieure est comprise entre 15% en poids et 30% en poids,
notamment entre 18% en poids et 27% en poids,
d'une manière tout à fait particulière, entre 21% et 24% en poids.

18. Système stratifié suivant l'une ou plusieurs des revendications précédentes,
dans lequel la teneur en chrome (Cr) de l'alliage de la strate (10) supérieure est comprise entre 12% en poids et 22% en poids,
notamment entre 15% en poids et 19% en poids.

19. Système stratifié suivant l'une ou plusieurs des revendications précédentes,
qui contient, dans la strate (10) supérieure, la phase β, notamment en au moins 5% en volume.

20. Système stratifié suivant l'une ou plusieurs des revendications précédentes,
dans lequel la strate (10) supérieure comporte un alliage de nickel (Ni), de cobalt (Co), d'aluminium (Al), de chrome (Cr), de tantale (Ta) et facultativement d'yttrium (Y),
en en étant notamment constituée.

21. Système stratifié suivant l'une ou plusieurs des revendications précédentes,
dans lequel la strate (10) supérieure comporte un alliage de nickel (Ni), de cobalt (Co), d'aluminium (Al), de chrome (Cr), de tantale (Ta) et facultativement d'yttrium (Y),
en en étant notamment constituée.

22. Système stratifié suivant l'une ou plusieurs des revendications précédentes,
dans lequel la teneur en chrome (Cr) de l'alliage de la couche (10) supérieure est comprise entre 12% en poids et 16% en poids, en étant notamment de 14,4% en poids.

23. Système stratifié suivant l'une ou plusieurs des revendications précédentes,
dans lequel la proportion d'aluminium (Al) de l'alliage de la couche (10) supérieure est comprise entre 7% en poids et 8% en poids,
en étant notamment de 7,75% en poids.

24. Système stratifié suivant l'une ou plusieurs des revendications précédentes,
dans lequel la proportion de rhénium (Re) de l'alliage de la couche (10) supérieure est comprise entre 0.1% en poids et 2% en poids.

25. Système stratifié suivant l'une ou plusieurs des revendications précédentes,
dans lequel la teneur en tantale (Ta) de l'alliage de la couche (10) supérieure est comprise entre 5% en poids et 6,8% en poids.

26. Système stratifié suivant l'une ou plusieurs des revendications précédentes,
dans lequel l'alliage des couches (7, 10) métalliques ne contient pas de platine (Pt).

27. Système stratifié suivant l'une ou plusieurs des revendications précédentes,
dans lequel la teneur en cobalt (Co) de l'alliage de la couche (10) supérieure est comprise entre 11,0% en poids et 14,5% en poids.

28. Système stratifié suivant l'une ou plusieurs des revendications précédentes,
dans lequel la teneur en chrome (Cr) de l'alliage de la couche (10) supérieure est comprise entre 14% et 16% en poids.

29. Système stratifié suivant l'une ou plusieurs des revendications précédentes,
dans lequel la teneur en aluminium (Al) de l'alliage de la couche (10) supérieure est comprise entre 9% en poids et 13% en poids.

30. Système stratifié suivant l'une ou plusieurs des revendications précédentes,
dans lequel la teneur en yttrium (Y) de l'alliage de la couche (10) supérieure est comprise entre 0,1% en poids et 0,7% en poids.

31. Système stratifié suivant l'une ou plusieurs des revendications précédentes,
dans lequel l'alliage de la couche (10) supérieure comporte du tantale (Ta) entre 4% en poids et 7,5% en poids,
notamment entre 3,0% en poids et 6,0% en poids.

32. Système stratifié suivant l'une ou plusieurs des revendications précédentes,
dans lequel la teneur en tantale (Ta) de l'alliage de la couche (10) supérieure est comprise entre 3,5% en poids et 5,5% en poids,
en étant notamment de 4.5% en poids.

33. Système stratifié suivant l'une ou plusieurs des revendications précédentes,
dans lequel la teneur en cobalt (Co) de l'alliage de la couche supérieure est comprise entre 21% en poids et 25% en poids,
notamment entre 22% en poids et 23,5% en poids,
en étant d'une manière tout à fait particulière de 23% en poids.

34. Système stratifié suivant l'une ou plusieurs des revendications précédentes,
dans lequel la teneur en chrome (Cr) de l'alliage de la couche (10) supérieure est comprise entre 18% en poids et 22% en poids.

35. Système stratifié suivant l'une ou plusieurs des revendications précédentes,
dans lequel la couche (10) supérieure n'a pas d'yttrium (Y).

36. Système stratifié suivant l'une ou plusieurs des revendications précédentes,
dans lequel la teneur en aluminium (Al) de l'alliage de la couche (10) supérieure est comprise entre 8% en poids et 12% en poids.

37. Système stratifié suivant l'une ou plusieurs des revendications précédentes,
dans lequel la teneur en yttrium (Y) de l'alliage de la couche (10) supérieure est comprise entre 0,1% en poids et 0,7% en poids.

38. Système stratifié suivant l'une ou plusieurs des revendications précédentes,
notamment pièce (120, 130, 155) d'une turbine (100) à gaz, d'une manière tout à fait particulière, dans lequel un substrat (4) du système (120, 130, 155) stratifié est à base de nickel ou à base de cobalt,
dans lequel une couche (16) calorifuge en céramique est déposée sur la couche (10) de protection.
